# EUROPEAN PATENT SPECIFICATION

(11) **EP 4 184 605 B1**
(45) Date of publication and mention of the grant of the patent: **14.10.2026**
(21) Application number: 22208252.1
(22) Date of filing: 18.11.2022
(51) Int. Cl.: H01M 4/04, H01M 4/16, H01M 10/06, H01M 4/36, H01M 4/56, H01M 4/62, H01M 12/00, H01G 11/12, H01G 11/26, H01G 11/86, H01G 11/50, H01G 11/70, H01G 11/32

(54) **METHOD FOR LEAD CARBON COMPRESSION MOULDING AND APPLICATIONS THEREOF**
VERFAHREN ZUM PRESSFORMEN VON BLEIKOHLENSTOFF UND ANWENDUNGEN DAVON
PROCÉDÉ DE MOULAGE PAR COMPRESSION DE CARBONE AU PLOMB ET SES APPLICATIONS

(30) Priority: 18.11.2021 US 202163281054 P
(43) Date of publication of application: 24.05.2023
(73) Proprietor: National Formosa University, Yunlin County 632 (TW)
(72) Inventor: HSIEH, SHU-HUEI, 632 Yunlin County (TW); WU, HUAI-JEN, 632 Yunlin County (TW); YAN, ZHI-XUAN, 632 Yunlin County (TW); SU, ZI-RUI, 632 Yunlin County (TW); WANG, SHI-MING, 632 Yunlin County (TW); PAN, BO-CHENG, 632 Yunlin County (TW); HSIEH, CHU-TING, 632 Yunlin County (TW); XIAO, CUN-HAO, 632 Yunlin County (TW); CHEN, HONG-CI, 632 Yunlin County (TW)
(74) Representative: Cabinet Chaillot

(56) References cited:
- CN-A- 106 486 645
- CN-A- 109 286 004
- US-A1- 2012 244 429

## Description

### FIELD OF THE INVENTION

The invention is related to a method for fabricating electrode, in particular, to a method for fabricating electrode made of both lead material and carbon material, also the fabricated electrode is further related to practical applications including lead-carbon electrode set and lead-carbon battery.

### BACKGROUND OF THE INVENTION

Nowadays, the price of fossil fuels is highly increased, the supply of fossil fuels is in continuous shortage, and the cost of using various kinds of energy is increased dramatically. In consideration of energy prices and environmental issues, the renewable energy has become the core development project among major countries. Wind power, tidal power, solar power or other renewable energy are the fields of high speed development among many existing technologies.

However, while the renewable energy being rapidly developed, the storage and distribution of energy become the key determinant factor of development in this field. All the aforementioned wind, tidal, and solar energy are renewable energy that rely on nature, and then they are influenced by climate or immediate environmental factors. For example, the well-known solar power generation uses solar panels to convert light energy into electricity, which is then stored in storage cells. Anyway, the storage cells used in the general solar power system are easily affected by the voltage instability caused by different strengths and weaknesses of the sunlight, Hence, required time for the storage cells to reach saturation is unavoidably unstable and charging by the solar panels is unstable. Clearly, the repeated unsaturated charging and discharging easily damage the batteries and then shorten their service life.

Except the aforementioned renewable energy storage grid demand, industrial applications have the same demand for the ability to withstand unstable voltage and unsaturated charging and discharging state of the battery. For example, a common technical approach for the battery used by hybrid vehicles is using power conversion during the drive to generate electricity. Anyway, like the situation of unstable power generation of renewable energy caused by weather factors, the power supply of the hybrid vehicles during the drive also is unstable owing to the impact of road conditions, and then the battery unavoidably faces voltage instability of the depletion pressure.

On the other hand, vehicle start-stop batteries face similar problems. For example, in common " 12-voltage start-stop system", voltage fluctuations caused by continuous engine starts produce considerable wear and tear on the start-stop battery. As a result, 12-voltage start-stop systems are susceptible to continuous voltage fluctuations caused by voltage drops. As a result, the battery life is impacted and frequent battery replacements are required, which leads to increased consumable costs in electric vehicles. Accordingly, in response to the aforementioned problems, there is an urgent requirement to develop new batteries or electrical energy storage devices that can withstand unstable voltages and large numbers of recycling. CN 109 286 004 A discloses a method for lead carbon compression moulding known from prior art.

### SUMMARY OF THE INVENTION

To address the above issue, the present invention provides a method for lead carbon compression moulding. The provided method comprises a first stacking step and a first compressing step. The first stacking step comprises the following: placing a first carbon material between a first lead material and a second lead material so as to form a first lead-carbon sandwich, wherein the first carbon material is a carbon fiber fabric which is made of materials selected from the group consisting of activated carbon, bamboo carbon, charcoal or any combination thereof, and the first compressing step comprises the following: compressing the first lead-carbon sandwich between a first compressing unit and a second compressing unit such that the first lead material and the second lead material are combined with the first carbon material so as to form a first lead-carbon electrode, wherein, before the compressing step (S2), the method further comprises heating the first compressing unit and the second compressing unit to a first temperature between 60 to 170°C. The first lead-carbon sandwich has a first thickness d1 and the first lead-carbon electrode has a second thickness d2, wherein the ratio of d1 to d2 is less than 10:1.

Optionally, in the method as previously described, one surface of the first lead material is in contact with the first carbon material to form a first joint surface and another surface is a first compressed surface directly contacted with the first compressing unit. Also, one surface of the second lead material is in contact with the first carbon material opposite to the first lead material to form a second joint surface and another surface is a second compressed surface directly contacted with the second compressing unit. Moreover, the distance between the first compressed surface of the first lead-carbon sandwich and the second compressed surface is the first thickness d1 and the distance between the first compressed surface of the first lead-carbon electrode and the second compressed surface is the second thickness d2.

Optionally, in the method as previously described, the lead to carbon ratio of the first joint surface is between 1:0.01 to 1:1, and the lead to carbon ratio of the second joint surface is between 1:0.01 to 1:1.

Optionally, in the method as previously described, the first compressing unit and the second compressing unit forms a working distance therebetween, wherein the ratio of the first thickness d1 to the working distance is between 1:1 to 35:1.

In the method as previously described, the first carbon material is a carbon fiber fabric, which is made of materials selected from the group consisting of activated carbon, bamboo carbon, charcoal or any combination thereof.

In the method as previously described, a first heating step is further comprised, which heats the first lead material, the second lead material and the first carbon material to a first temperature before the first stacking step, wherein the first temperature is between 60 °C and 170 °C.

Optionally, in the method as previously described, the first compressing unit is a first roller and the second compressing unit is a second roller. Wherein, the first roller and the second roller roll relative to each other along their respective axes at a rolling rate so as to compress the first thickness d1 into the second thickness d2, also the ratio of d1 to d2 is between 3:1 to 6.5:1.

Optionally, in the method as previously described, a second stacking step and a second compressing step is further comprised. The second stacking step comprises the following: placing a second carbon material between the first lead-carbon switch and a third lead material so as to form a second lead-carbon sandwich. The second compressing step comprises the following: compressing the second lead-carbon sandwich between the first compressing unit and the second compressing unit such that the third lead material and the second carbon material are combined with the first lead-carbon switch so as to form a second lead-carbon electrode. Wherein, the second lead-carbon sandwich has a third thickness d3 and the second lead-carbon electrode has a fourth thickness d4, and the ratio of d3 to d4 is less than 10:1.

Moreover, the present invention also provides a lead-carbon electrode set comprising at least one lead-carbon electrode made by the method as previously described.

Further, the present invention also provides a lead-carbon battery comprising an electrolyte, an anode sheet set and a cathode sheet set. Wherein the anode sheet set is immersed in the electrolyte and electrically connected to an anode, and comprises the lead-carbon electrode set as previously described. Wherein, the cathode sheet set is immersed in the electrolyte and electrically connected to a cathode, and comprises the lead-carbon electrode set as previously described.

The method provided by the present invention is environmentally friendly, easy to fabricate, and free of heat treatment process. The method also allows the temperature of compressed lead-carbon molding to be adjusted according to the user's demands. In addition, the fabricating environment does not require additional pressurized air, which saves energy, reduces carbon emissions, and reduces hazards to the operator. In addition, the lead material and carbon materials do not require pretreatment, which reduces the emission of organic solvents and reduces environmental pressure. The lead-carbon electrode provided by the present invention can be used as a super capacitor, which is adapt to current and voltage fluctuations easily encountered in fast charge/discharge cycles and can withstand multiple cycles. It has stable Coulomb efficiency, stable depth-of-discharge performance, and low battery breakage rate. Therefore, it can be applied to storage devices used to store recycle energy and also to improve the rapid wear and tear of batteries in the automotive industry.

### BRIEF DESCRIPTION OF THE DRAWINGS

FIG. 1A is a flow chart illustrating a method for lead carbon compression moulding, FIG. 1B is a structural schematic diagram illustrating the first lead-carbon sandwich, FIG. 1C is a structural schematic diagram illustrating the first lead-carbon electrode, and FIG. 1D is an exemplary structure for illustrating the roller compression lead carbon moulding.
FIG. 2A is a flow chart illustrating alternative implementation of the method for lead carbon compression moulding, FIG. 2B is a structural schematic diagram illustrating the second lead-carbon sandwich, FIG. 2C is a structural schematic diagram illustrating the second lead-carbon electrode, and FIG. 2D is another exemplary structure for illustrating the roller compression lead carbon moulding.
FIG. 3A is a structural schematic diagram illustrating how at least two first lead-carbon electrodes are stacked together, FIG. 3B is a structural schematic diagram illustrating another example of the second lead-carbon electrode.
FIG. 4 is a longitudinal sectional electronic micrograph of lead-carbon electrode
FIG. 5 is a schematic diagram of the side view of the electrode set provided by the invention.
FIG. 6 is a schematic diagram of the side view of the battery provided by the invention.
FIG. 7A to FIG. 7C are the external views of the lead-carbon electrodes according to comparison examples 1~3.
FIG. 8A is the sectional electronic micrograph of the lead-carbon electrode according to embodiment 3 which showing the joint surface of lead material and carbon material, and FIG. 8B is the external view of the lead-carbon electrode according to embodiment 6.
FIG. 9A to FIG. 9C are the charging/discharging test record chart according to experimental embodiment 1.
Fig. 10A to FIG. 10C are the charging/ discharging test record chart according to experimental embodiment 2.

### DETAILED DESCRIPTION OF THE INVENTION

The following embodiments are used to illustrate the technical content of the present invention, but they do not limit the manner of implementation of the invention. All the methods, materials, structures and other aspects that are not outside the spirit of the invention are within the scope of protection of the invention.

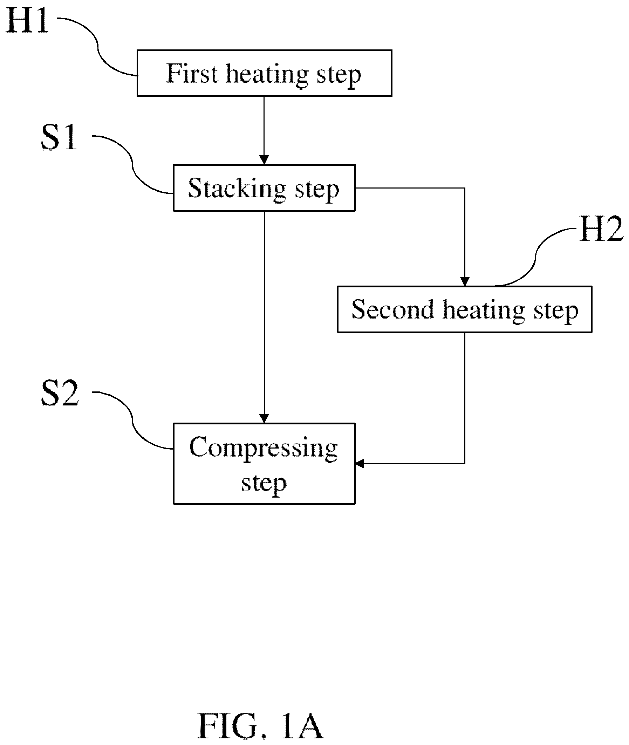

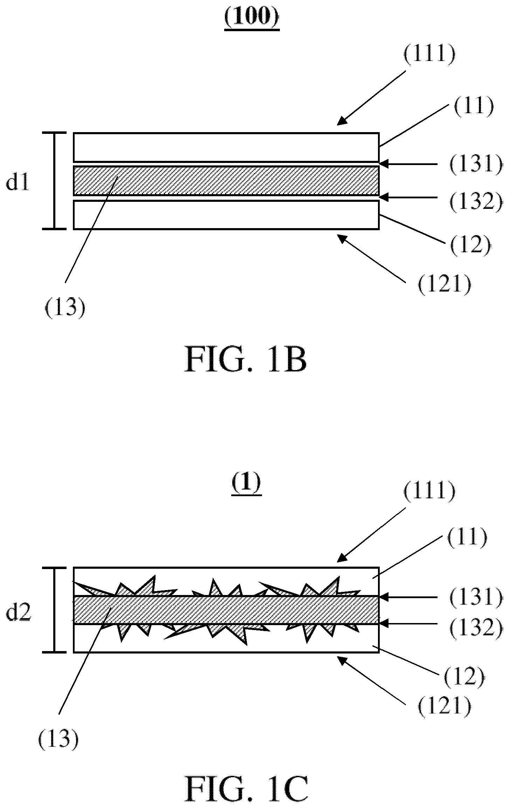

One implementation of the invention provides a method for lead carbon compression moulding, which comprises a stacking step (S1) and a compressing step (S2). By referring to FIG. 1A to FIG. 1D, the stacking step (S1) comprises the following: placing a first carbon material (13) between a first lead material (11) and a second lead material (12) so as to form a first lead-carbon sandwich (100), and the compressing step (S2) comprises the following: compressing the first lead-carbon sandwich (100) between a first compressing unit (31) and a second compressing unit (32) such that the first lead material (11) and the second lead material (12) are combined with the first carbon material (13) so as to form a first lead-carbon electrode (1).

In this embodiment, after being quantified, the ratio of lead to carbon in the joint surface between lead material and carbon material and the distance between the compressed surfaces between the compressing units are acquired. These aforementioned parameters have a profound effect on the function of the first lead-to-carbon electrode (1) in terms of capacitance, conductivity and battery life in battery applications. In details, one surface of the first lead material (11) is in contact with the first carbon material (13) to form a first joint surface (131), and another surface is a first compressed surface (111) in physical contact with the first compressing unit (31). Also, one surface of the second lead material (12) opposite to the first lead material (11) is in contact with the first carbon material (13) to form a second joint surface (132), and another surface is a second compressed surface in physical contact with the second compressing unit (32). For the first joint surface 131 and the second joint surface 132, the lead to carbon ratio is between 1:0.01 to 1:1.0, preferably between 1:0.03 to 1:0.5.

In details, the lead to carbon ratio is the lead to carbon atomic number ratio, which is obtained by calculating the number of lead atoms contained in the lead material and the number of carbon atoms contained in the carbon material, respectively. As shown in Table 1A, the number of lead atoms contained in the lead material and the number of carbon atoms contained in the carbon material and their ratios for various embodiments of fabrications 1 to 8 are listed, wherein the lead to carbon atomic number ratio is between 1:0.07 to 1:0.3.

**Table 1A**

| | lead material | | Carbon material | | |
|---|---|---|---|---|---|
| | atomic number (mole) | number (sheet) | atomic number (mole) | number (sheet) | lead to carbon atomic number ratio |
| 1 | 0.57 | 2 | 0.04 | 2 | 1:0.07 |
| 2 | 0.57 | 4 | 0.04 | 2 | 1:0.07 |
| 3 | 0.57 | 4 | 0.04 | 2 | 1:0.07 |
| 4 | 0.62 | 4 | 0.05 | 2 | 1:0.08 |
| 5 | 0.62 | 3 | 0.05 | 2 | 1:0.08 |
| 6 | 0.62 | 3 | 0.24 | 2 | 1:0.39 |
| 7 | 0.86 | 3 | 0.07 | 2 | 1:0.08 |
| 8 | 0.57 | 2 | 0.18 | 9 | 1:0.32 |

In this implementation, some embodiments illustrate that the joint surface among the first lead material (11), the second lead material (13) and the first carbon material (12) is also influenced by their ratio of lead to carbon volumes. In details, the ratio of the total volume (VPb) of the first lead material (11) and the second lead material (13) to the total volume (VC) of the first carbon material (12) is between 1:0.01 to 1:1.0, preferably between 1:0.03 to 1:0.8. As shown in Table 1B, the volume of lead and the volume of carbon and their ratios are listed for embodiments of fabrications 1 to 8. In these embodiments, the ratio of lead to carbon material VPb: VC is between 1:0.05 to 1:0.56.

**Table 1B**

| | first lead material | | second lead material | | first carbon material | | VPb (cm³) | Vc (cm³) | V_{Pb}: V_{C} |
|---|---|---|---|---|---|---|---|---|---|
| | volume (cm³) | number (sheet) | volume (cm³) | number (sheet) | volume (cm³) | Number (sheet) | | | |
| 1 | 10.4 | 1 | 10.4 | 1 | 1.260 | 2 | 20.8 | 2.52 | 1: 0.12 |
| 2 | 10.4 | 2 | 10.4 | 2 | 1.260 | 2 | 41.6 | 2.52 | 1: 0.06 |
| 3 | 10.4 | 2 | 10.4 | 2 | 1.260 | 2 | 41.6 | 2.52 | 1: 0.06 |
| 4 | 11.7 | 2 | 11.7 | 2 | 1.225 | 2 | 46.8 | 2.45 | 1: 0.05 |
| 5 | 11.7 | 2 | 11.7 | 1 | 1.225 | 2 | 35.1 | 2.45 | 1: 0.07 |
| 6 | 11.7 | 2 | 11.7 | 1 | 1.568 | 2 | 35.1 | 3.136 | 1: 0.09 |
| 7 | 11.7 | 2 | 11.7 | 1 | 2.200 | 2 | 35.1 | 4.4 | 1: 0.13 |
| 8 | 11.7 | 1 | 11.7 | 1 | 1.470 | 9 | 23.4 | 13.23 | 1: 0.56 |

To be embodiments, the first compressing unit (31) and the second compressing unit (32) forms a working distance (w) therebetween, which is smaller or equal to the distance from the first compressed surface (111) to the second compressed surface (112), i.e., is the first thickness d1 of the first lead-carbon sandwich (100). During the compressing step (S2), the first compressing unit (31) and the second compressing unit (32) apply a vectorial relative compressing pressure, defined by the working distance (w), on the first compressed surface (111) and the second compressed surface (121) respectively. Wherein, the working distance (w) is between 0.1 to 2.0 centimeter, preferably between 0.01 to 0.1 centimeter. The first lead-carbon sandwich is reformed by the compressing force to be the first lead-carbon electrode (1) which has a second thickness d2 being smaller the d1. The preferred ratio of d1 to d2 is smaller than 10:1, preferably between 3:1 to 6.5:1. As shown in Table 1C, some specific data related to various embodiments such as fabrications 1 to 7 are listed, such as the ratio of the quantity of lead to carbon material, the first thickness d1 of the lead to carbon sandwich and the second thickness d2 after compression. In these embodiments, the ratio of the first thickness d1 to the second thickness d2 is between 3.5:1 to 6.39:1.

**Table 1C**

| | first lead material | | second lead material | | first carbon material | | d1 (cm) | d2 (cm) | d1: d2 |
|---|---|---|---|---|---|---|---|---|---|
| | thickness (cm) | number (sheet) | thickness (cm) | number (sheet) | thickness (cm) | number (sheet) | | | |
| 1 | 0.1 | 1 | 0.1 | 1 | 0.030 | 2 | 0.26 | 0.072 | 3.61 :1 |
| 2 | 0.1 | 2 | 0.1 | 2 | 0.030 | 2 | 0.46 | 0.072 | 6.39 :1 |
| 3 | 0.1 | 2 | 0.1 | 2 | 0.030 | 2 | 0.46 | 0.092 | 5.00 :1 |
| 4 | 0.1 | 2 | 0.1 | 2 | 0.025 | 2 | 0.45 | 0.087 | 5.17 :1 |
| 5 | 0.1 | 2 | 0.1 | 1 | 0.025 | 2 | 0.35 | 0.085 | 4.12 :1 |
| 6 | 0.1 | 2 | 0.1 | 1 | 0.032 | 2 | 0.36 | 0.087 | 4.18 :1 |
| 7 | 0.1 | 2 | 0.1 | 1 | 0.025 | 2 | 0.35 | 0.100 | 3.50 :1 |

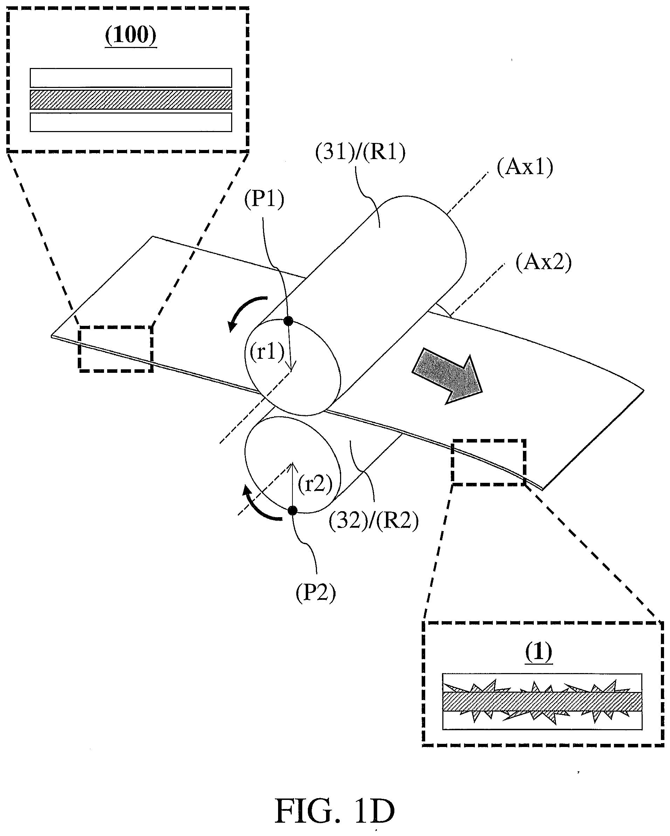

In a particular embodiment, the first compressing unit (31) is a first roller (R1) and the second compressing unit (32) is a second roller (R2), wherein the first roller (R1) and the second roller (R2) roll at a rolling rate relative to each other along their respective axes. In order to stabilize the quality of the fabricated lead-carbon electrode so that the ratio of d1 to d2 can be stable between the aforementioned ratio range, the working distance (w) is set in the range of 0.01 to 2.0 cm, preferably 0.01 to 0.1 cm, and the rolling rate is set from 0.2 to 25 rpm. FIG. 1D illustrates one preferred embodiment of the method in the implementation. In short, the first lead-carbon sandwich (100) moves from one end of the working spacing (w) formed between the first roller (R1) and the second roller (R2) to the other end, and the movement is driven by the opposing motion between the first roller (R1) and the second roller (R2). Wherein, a first pressure point (P1) on the circumference of this first roller (R1) moves along a first axis (Ax1) with a first fixed radius (r1) towards this first lead-carbon sandwich (100). In contrast, a second pressure point (P2) on the circumference of the second roller (R2) moves along a second axis (Ax2) with a second fixed radius (r2) towards the second lead-carbon sandwich (100). Wherein, the ratio of the first fixed radius (r1) to the second fixed radius (r2) is 1:1. Thus, when the first pressure point (P1) and the second pressure point (P2) move to the first pressure surface (111) and the second pressure surface (121) respectively, a compressing pressure is applied to the first lead-carbon sandwich (100) for changing its thickness and completing the combining of the lead material and the carbon material.

In this implementation, better, the ratio of the first thickness d1 to the working distance (w) is between 1:1 to 35:1, preferably 4:1 to 30:1. As shown in Table 2, some embodiments, such as fabrications 8 to 14, are listed to present the ratio of the number of lead material to carbon material, the first thickness (d1) of the lead-carbon sandwich, and the working distance (w) between the compressed lead-carbon sandwiches in this implementation. In these embodiments, the ratio of the first thickness (d1) to the working distance (w) is between 4.7:1 to 29:1.

**Table 2**

| | first lead material | | second lead material | | first carbon material | | first thickness d1 (cm) | working distance (w) (cm) | d1: (w) |
|---|---|---|---|---|---|---|---|---|---|
| | thickness (cm) | number (sheet) | thickness (cm) | number (sheet) | thickness (cm) | number (sheet) | | | |
| 8 | 0.1 | 1 | 0.1 | 1 | 0.03 | 9 | 0.47 | 0.1 | 4.70 :1 |
| 9 | 0.1 | 1 | 0.1 | 1 | 0.03 | 3 | 0.29 | 0.01 | 29.0 :1 |
| 10 | 0.1 | 2 | 0.1 | 1 | 0.03 | 2 | 0.36 | 0.067 | 5.37 :1 |
| 11 | 0.1 | 2 | 0.1 | 2 | 0.03 | 2 | 0.46 | 0.06 | 7.67 :1 |
| 12 | 0.1 | 1 | 0.1 | 1 | 0.03 | 2 | 0.26 | 0.045 | 5.78 :1 |
| 13 | 0.1 | 2 | 0.1 | 1 | 0.05 | 2 | 0.40 | 0.075 | 5.33 :1 |
| 14 | 0.1 | 2 | 0.1 | 2 | 0.05 | 3 | 0.55 | 0.075 | 7.33 :1 |

In order to further verify that the lead-carbon electrode obtained by the above method has good lead-carbon combining properties, the first lead-carbon electrode (1) is further subjected to a peel strength test, which can withstand a peel force of 15 to 29 kg. Generally, the peel strength test is used to measure the adhesive strength of materials. The well-known peel strength test separates the combined material at an angle of 180 degrees to test the average load per unit width of the combining line. It has been popularly used to measure the adhesive strength of films, biological materials, dental materials, medical packaging, etc., and also can be used to measure the combining properties of the first lead-carbon electrode (1). Specifically, the first lead material (11) and the second lead material (13) are pulled in opposite directions by a peeling force tester to test the force required to peel the first lead material (11) or the second lead material off the first carbon material (12).

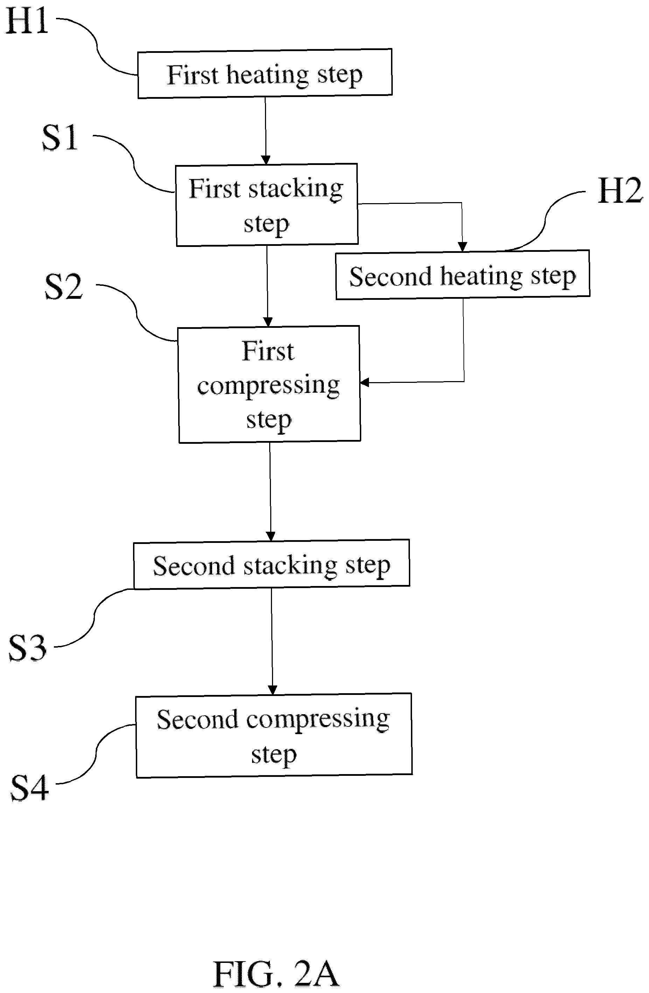

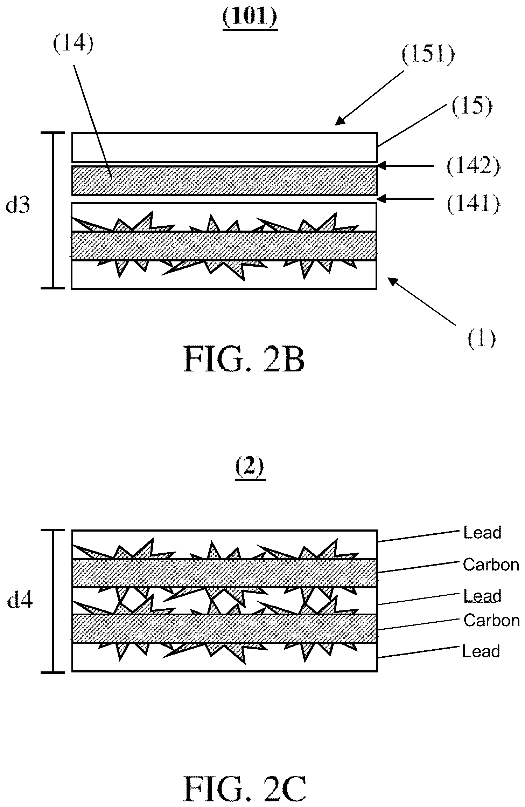

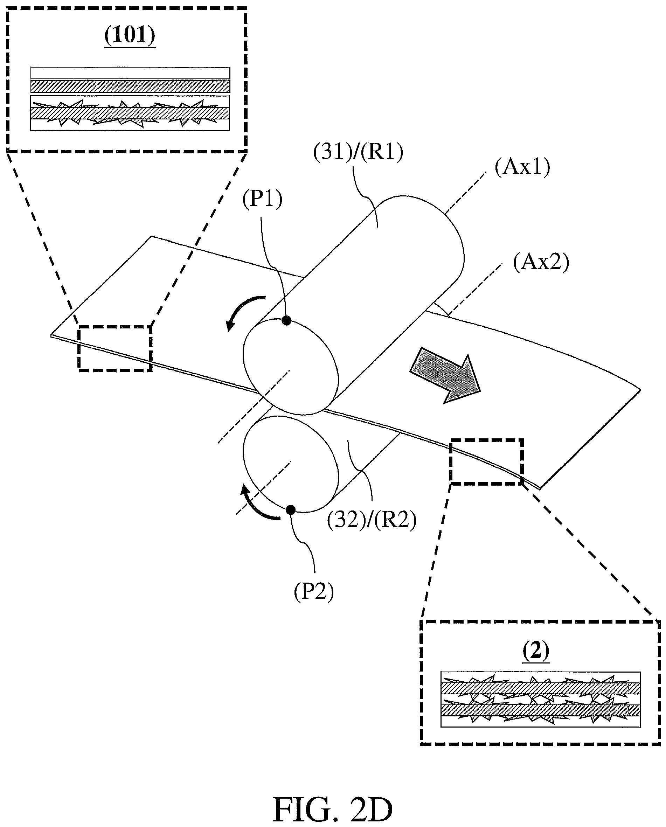

In this implementation, in order to substantially increase the electrical capacity of the lead-carbon electrode to meet the demand of the back-end battery, the method further includes a second stacking step (S3) and a second compressing step (S4). As shown in FIG. 2A, the second stacking step (S3) comprises the following: placing a second carbon material (14) between the first lead-carbon sandwich (100) and a third lead material (15) to obtain a second lead-carbon sandwich (101), also the second compressing step (S4) comprises the following: compressing the second lead-carbon sandwich (101) between the first compressing unit (31) and the second compressing unit (32) to make the second lead-carbon electrode (2), wherein the second lead-carbon electrode (2) is obtained by combining the third lead material (15) and the second carbon material (14) with the first lead-carbon sandwich (100). The second lead-carbon electrode (2) has a lead-carbon-lead-carbon-lead structure, which increases the overall thickness of the lead-carbon electrode to increase the electrode thickness in response to the battery capacity demand, but not limited herein. In these embodiments, one side of the second carbon material (14) is in contact with the first lead material (11) or the second lead material (12) to form a third joint surface (141), and a fourth joint surface (142) is in contact with the third lead material (15) opposite to the third joint surface (141). Also, one side of the third lead material (15) opposite to the fourth joint surface (142) is a third compressed surface (151). Wherein, the lead to carbon ratio of the third joint surface (141) and the fourth joint surface (142) is between 1:0.01 to 1:1.0, better 1:0.03 to 1:0.5, and further preferably 1:0.07 to 1:0.3.

The second lead-carbon sandwich (101) has a third thickness d3 and the second lead carbon electrode (2) has a fourth thickness d4. Under the action of the compressing pressure, the d4 is smaller than the d3, and the ratio of d3 to d4 is better less than 10:1, favorably between 5:1 to 9:1. In several embodiments, the working distance (w) is set in the range of 0.1 to 2.0 centimeters, preferably 0.01 to 0.1 centimeters, and the rolling rate is set from 0.2 to 25 rpm. Thus, the ratio of d3 to d4 is stabilized between the aforementioned ratio range, and then the quality of the produced lead-carbon electrode is stabilized.

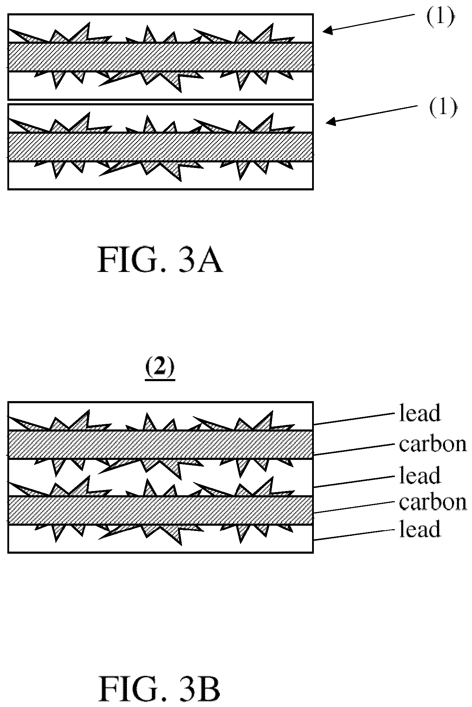

In some embodiments, the second stacking step (S3) comprises laminating at least two first lead carbon electrodes (1) as previously described. Wherein, these first lead-carbon electrodes (1) are in contact with each other on the lead side to form a laminated structure. As shown in FIG. 3A, the structure of the two first lead-carbon electrodes (1) as described above are shown in detail. As shown in FIG. 3B, the second lead-carbon electrode (2) formed after the second compressing step (S4) has a lead-carbon-lead-carbon-lead structural layer.

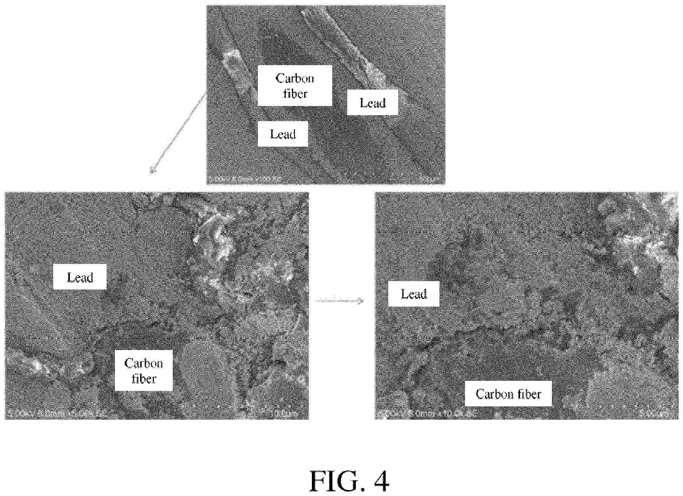

The method according to the invention is performed under heated conditions. Note that the heating temperature is not higher than the melting point of lead, 327.5°C, unlike the conventional infiltration method of molting lead into carbon. To combine the carbon material while the semi-rong molten lead material retains the original shape of the lead material, the temperature is raised to 60 to 170°C, and preferably 110 to 150°C. As shown in FIG. 4, in one embodiments of this embodiment, the longitudinal section of the lead-carbon electrode can present that the carbon fibers can be covered by the lead material with no gap therebetween. More specifically, it is optional to heat all of the lead-carbon sandwich, the first compressing unit and the second compressing unit, or optional to heat both the first compressing unit and the second compressing unit, or optional to only heat the lead-carbon sandwich. Indeed, to achieve the desired effect of the present method, the only requirement is that the lead-carbon sandwich has been brought to the required temperature to change the lead material to a semi-molten state.

To achieve the aforementioned heating purpose, as shown in FIG. 1A and FIG. 2A, the method further comprises a first heating step (H1), a second heating step (H2) or a combination thereof. The first heating step (H1) comprises heating the first lead material (11), the second lead material (12) and the first carbon material (13) to a first temperature before the stacking step (S1). The second heating step (H2) comprises heating the first lead-carbon sandwich (100), and/or both the first compressing unit (31) and the second compressing unit (32) to a second temperature before the compressing step (S2). Wherein the second temperature is equal to or not equal to the first temperature. According to the invention the first temperature is between 60 and 170°C, preferably between 110 and 150° C. The second temperature is between 60 and 170°C, preferably between 110 and 150°C.

In the present invention the carbon material is a carbon fiber fabric which is made of materials selected from the group consisting of activated carbon, bamboo carbon, charcoal or any combination thereof. Specifically, the carbon fiber fabric provided by different companies can be used, such as the activated carbon fiber fabric (ECF) provided by Chemviron Carbon in the United Kingdom and the general engineering reinforcement carbon fiber (PCF) provided by Taiwan Plastic Industry Co. Because the method provided by the invention can optionally be carried out at room temperature or under heated conditions, the aforementioned carbon fabrics need not be further treated with other chemical treatments such as chemical oxidation (Cox), heat oxidation in air (Aox) or plasma oxidation treatment (POX). This invention uses lead and carbon heterogeneous materials and combine lead material and carbon material strongly. Thus, a lead-carbon joint surface with high electrochemical stability is formed. By using low temperature compression, the lead material can penetrate into the gap of carbon fiber woven structure and form a complete covering structure around the carbon fiber, which makes the lead-carbon surface dense. By using the conductive network formed by the interweaving of carbon fibers in the carbon fiber fabric, not only the conductivity and capacity of lead-carbon electrode are improved, but also the electrochemical reaction between the carbon material and electrolyte during the charging and discharging process are prevented. Moreover, the conventional lead-acid batteries induce lead sulfate during the charging and discharging process. The accumulation of lead sulfate decreases both the conductivity of the electrode and the capacity of the electrode. Thus, the Columbic efficiency is lowered and the battery life is reduced. Further, carbon material does not react electrochemically with electrolyte. Thus, it slows down the accumulation of lead sulfate. Besides, because carbon fibers are interwoven inside the electrode sheet to form a conductive network, it maintains the conductivity of the electrode sheet and greatly improves the conductivity of the electrode sheet simultaneously. Furthermore, the low impedance makes the electrode sheet not easy to generate heat and the energy is fully released in the discharge, hence, it can maintain the Columbic efficiency close to 100% after several cycles of charging and discharging.

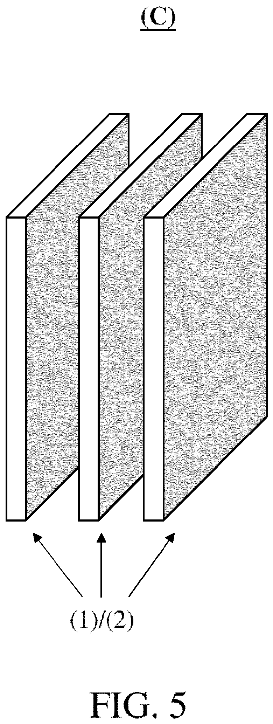

Based on the aforementioned lead-carbon electrode, the present invention can be further applied to realize a lead-carbon electrode set (C). As shown in FIG. 5, some embodiments of the lead-carbon electrode set (C) are illustrated. The lead-carbon electrode set (C) comprises at least a first lead-carbon electrode (1), a second lead-carbon electrode (2) or a combination thereof made by the method described previously.

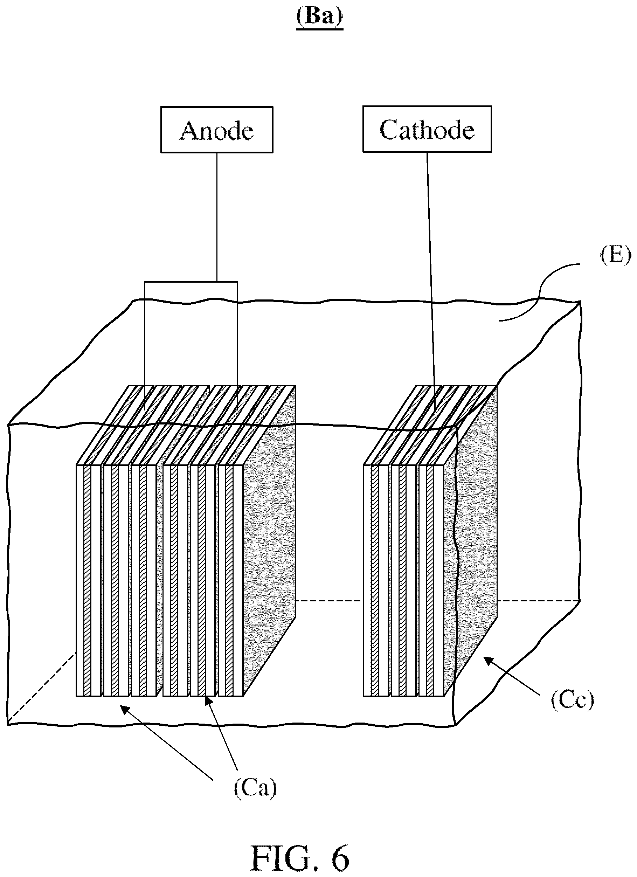

Based on the aforementioned lead-carbon electrodes and/or lead-carbon electrode sets, the present invention can be further used to implement a lead-carbon battery (Ba). As shown in FIG. 6, the lead-carbon battery (Ba) comprises an electrolyte (E), an anode set (Ac) immersed in the electrolyte and electrically connected to an anode comprising an electrode set (C) as previously described, and a cathode set (Cc) immersed in the electrolyte (E) and electrically connected to a cathode (Ca) which comprising an electrode set (C) as previously described. The electrolyte is not particularly limited, wherein some suitable electrolytes are sulfuric acid solutions.

Some comparison examples, embodiments and experimental examples listed below are used to illustrate the specific implementation of the present invention and the technical efficacy achieved, but not intended to limit the scope of the rights covered by the present invention.

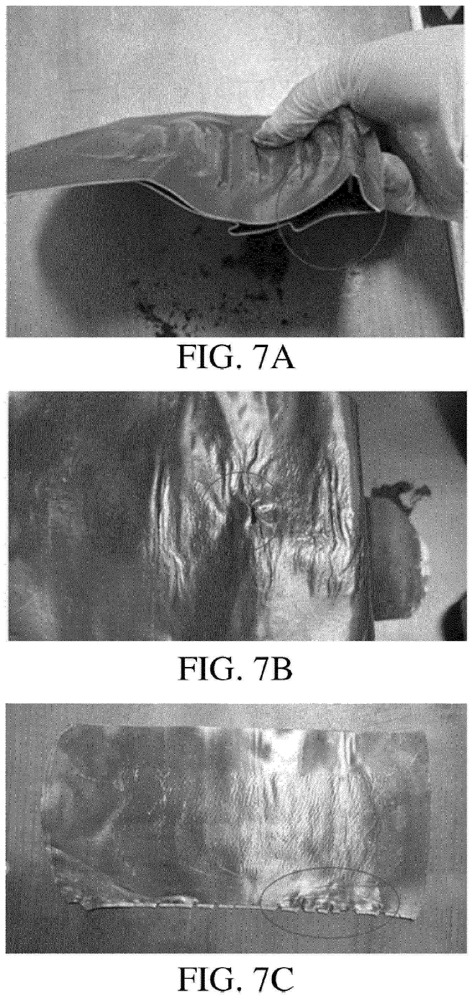

Comparison example 1. Initially, prepare 2 pieces of pure lead sheet with dimensions of 13 cm length, 9 cm width and 0.11 cm thickness, and prepare 10 pieces of carbon cloth with dimensions of 7 cm length, 7 cm width and 0.03 cm thickness, wherein the volume ratio of lead to carbon is 1:0.6. Next, coat graphite release agent on the surface of the upper and lower rollers, and place carbon cloth between the pure lead sheets to form the lead-carbon sandwich. Then, heat the rollers to 100°C, adjust the axis distance between the rollers to 0.1 cm, and set the rolling speed to 1.2 rpm. After that, place the lead-carbon sandwich between the rollers and squeeze the lead-carbon sandwich. As shown in FIG. 7A, the comparison example 1 cannot form the lead-carbon electrode, wherein the round box indicates that the lead-carbon combination could not be formed.

Comparison example 2. Initially, prepare 2 pieces of pure lead sheet with dimensions of 13 cm length, 9 cm width and 0.11 in thickness, and prepare 2 pieces of carbon cloth with dimensions of 7 cm length, 7 cm width and 0.03 cm thickness, wherein the volume ratio of lead to carbon is 1:0.6. Next, coat graphite release agent on the surface of the upper and lower rollers, and place carbon cloth between the pure lead sheets to form the lead-carbon sandwich. Then, heat the rollers to 180°C, adjust the axis distance between the rollers to 0.045 cm, and set the rolling speed to 1.2 rpm. After that, place the lead-carbon sandwich between the rollers and squeeze the lead-carbon sandwich. As shown in FIG. 7B, the comparison example 2 cannot form the lead-carbon electrode, wherein the round box indicates the exposed carbon material for showing the damaged surface of the lead material.

Comparison example 3. Initially, prepare 2 pieces of pure lead sheet with dimensions of 13 cm length, 9 cm width and 0.11 cm thickness, and prepare 2 pieces of carbon cloth with dimensions of 7 cm length, 7 cm width and 0.03 cm thickness. Next, coat graphite release agent on the surface of the upper and lower rollers, and place carbon cloth between the pure lead sheets to form the lead-carbon sandwich. Then, heat the rollers to 50°C, adjust the axis distance between the rollers to 0.045 cm, and set the rolling speed to 1.2 rpm. After that, place the lead-carbon sandwich between the rollers and squeeze the lead-carbon sandwich. As shown in FIG. 7C, the comparison example 3 cannot form the lead-carbon electrode, wherein the round box indicates some uneven cracks indicating the lead-carbon combination is non-uniform.

Embodiment 1. Initially, prepare two pieces of pure lead sheet with dimensions of 17 cm length, 11 cm width, and 0.11 cm thickness, and prepare two pieces of carbon cloth with dimensions of 11 cm length, 8 cm width, and 0.025 cm thickness. Next, apply graphite release agent to the surfaces of the upper and lower rollers and place the carbon cloth between the pure lead sheets to form a lead-carbon sandwich. Then, heat the rollers to 110°C, adjust the axis distance between the rollers to 0.06 cm, and set the rolling speed to 0.6 rpm. After that, place the lead-carbon sandwich between the rollers and squeeze the lead-carbon sandwich to form a lead-carbon electrode. Finally, remove the lead-carbon electrode from the rollers, cut the lead-carbon electrode to 6.6 cm long and 3.7 cm wide with a 2.0 cm long lug, and then use acetone to clean.

Embodiment 2. Initially, prepare 2 pieces of pure lead sheets with dimensions of 17 cm long, 11 cm wide and 0.11 cm thick, and prepare 2 pieces of carbon cloth with the dimensions of 11 cm long, 8 cm wide and 0.025 cm thick. Next, clean, polish, heat and dry the pure lead sheets before treatment. Then, apply graphite release agent on the surface of the upper and lower rollers, and place the carbon cloth between the pure lead sheets to form a lead-carbon sandwich, wherein the lead-carbon sandwich is arranged as lead-carbon-carbon-lead. And then, heat the rollers to 150°C, adjust the axis distance between the rollers to 0.11cm, and set the rolling speed at 0.6rpm. After that, place the lead-carbon sandwich between the rollers and squeeze it at a rolling speed of 0.6 rpm to obtain a lead-carbon electrode No. 1, remove the lead-carbon electrode No. 1 from the rollers and repeat the above steps to complete a lead-carbon pole No. 2. Moreover, place the lead-carbon electrode No. 1 on the lead-carbon electrode No. 2 to form an electrode sandwich. Again, maintain the roller temperature at 150°C and the axis distance at 0.11 cm, also set the rolling speed at 0.6 rpm. And then place the electrode sandwich between the rollers and squeeze the electrode sandwich at a rolling speed of 0.6 rpm to obtain a No. 3 lead-carbon electrode with a thickness of 0.1 cm. Wherein, the structure of the No. 3 lead-carbon electrode is lead-carbon-carbon-lead-carbon-lead in order, which has high capacity and fast charging and discharging performance.

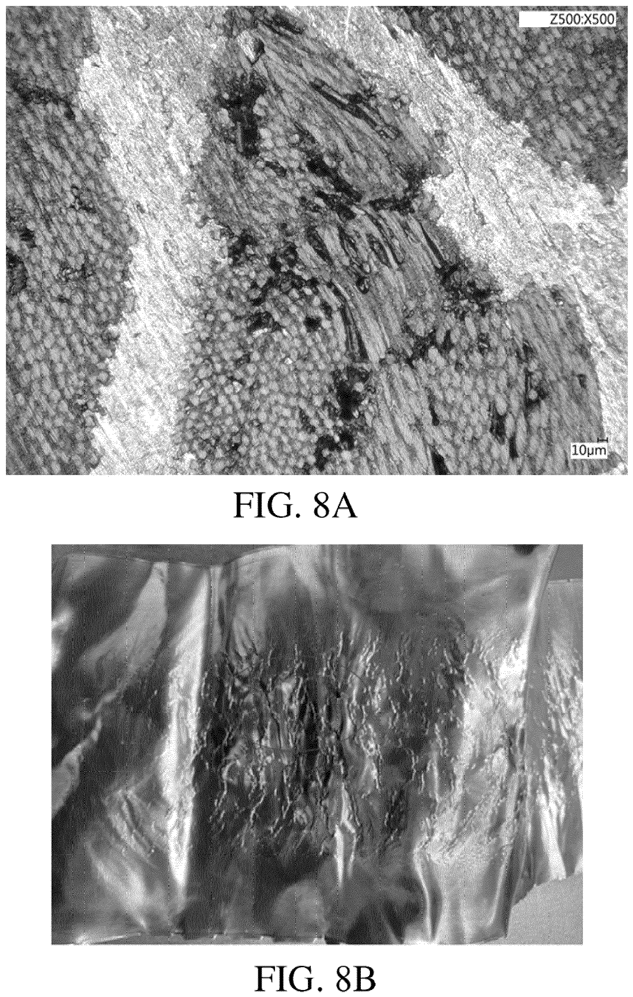

Embodiment 3. Initially, prepare 2 sheets of pure lead with dimensions of 17 cm length and 11 cm width, and prepare 5 sheets of carbon cloth with dimensions of 11 cm length and 8 cm width. Next, apply graphite release agent on the surface of the upper and lower rollers, and place the carbon cloth between the pure lead sheets to form a lead-carbon sandwich. Then, heat up the rollers to 110°C, adjust the axis distance between the rollers to 0.06 cm, and set the rolling speed to 0.6rpm. And then, place the lead-carbon sandwich between the rollers and squeeze the lead-carbon sandwich to form a lead-carbon electrode. After that, remove the lead-carbon electrode from the rollers and cut the lead-carbon electrode into electrodes with dimensions of 6.6 cm length and 3.7 cm width and with 2.0 cm long lugs. Moreover, clean it with acetone. As shown in FIG. 8A, which is an enlarged view of the lead-carbon section of the lead-carbon electrode prepared in embodiment 3, it can be seen that lead and carbon are tightly combined and also the carbon fiber bundle is retained intact.

Embodiment 4. Use the lead-carbon electrode formed in the embodiment 1 to form a lead-carbon cell LCFNR4-2 having an anode and a cathode, and an electrolyte with 56.3 ml of sulfuric acid solution. The anode is connected to an anode sheet set by wire welding, immersed in the sulfuric acid solution and has four lead-carbon electrodes as described in embodiment 1. The cathode is connected to a cathode sheet set by wire welding, immersed in the sulfuric acid solution and has 5 lead-carbon electrodes as described in embodiment 1.

Embodiment 5. Use the lead-carbon electrode set formed in the embodiment 2 and the embodiment 3 to form a lead-carbon battery LCFN25-2 which comprises an anode, a cathode, and an electrolyte with 40.4 ml of sulfuric acid solution. This anode is connected to an anode sheet set by wire welding, immersed in the sulfuric acid solution and has six lead-carbon electrodes as made in the embodiment 2. The cathode is connected to a cathode set by wire welding, immersed in the sulfuric acid solution and has 7 lead-carbon electrodes as made in the embodiment 3.

Embodiment 6. Initially, prepare 2 pieces of pure lead sheet with dimensions of 13 cm length, 9 cm width and 0.11 cm thickness, and prepare 4 pieces of carbon cloth with dimensions of 7 cm length, 7 cm width and 0.03 cm thickness. Next, Coat graphite release agent on the surface of the upper and lower rollers, and place the carbon cloth between the pure lead sheets to form a lead-carbon sandwich. Then, heat the rollers to 100°C, adjust the axis distance between the rollers to 0.01cm, and set the rolling speed to 1.2rpm. And then, place the lead-carbon sandwich between the rollers and squeeze the lead-carbon sandwich to form a lead-carbon electrode. After that, remove the lead-carbon electrode from the rollers. As shown in FIG. 8, the embodiment 6 can form the lead-carbon electrode. But, as indicated by the round box, the surface of the lead material has wrinkles and unevenness, which indicates that the lead carbon combination is synthetic but the molding effect is poor while being compared with the embodiment 1 or the embodiment 2.

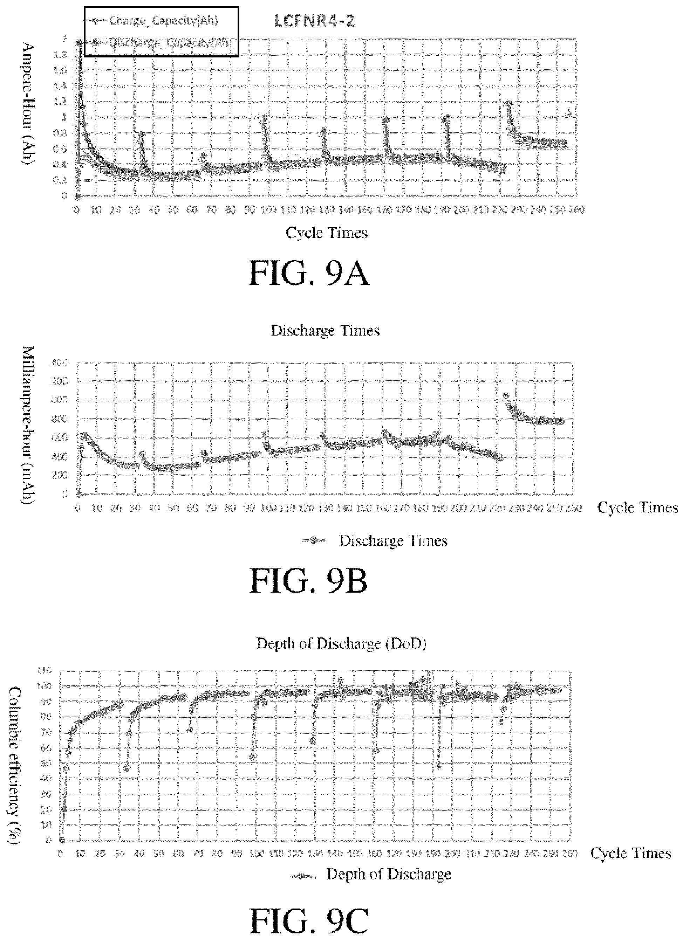

Experimental example 1. The LCFNR4-2 lead-carbon battery of the embodiment 4 was tested for saturation and unsaturation cycles by charging and discharging at constant current. As shown in FIG. 9A, the battery was charged at a constant current of 1.2 amps (A) and a constant voltage of 2.4 volts (V) for 2 hours, and then discharged at a constant current of 3.6 amps and a cutoff voltage of 1.5 volts. Totally, 260 cycles of charging and discharging was done. As shown in FIG. 9A and FIG. 9B, with the increase in the number of charging and discharging cycles, the Columbic efficiency (charging capacity/discharging capacity, %) of the LCFNR4-2 is almost maintained at a level of 100%, but the capacity grows from 0.3 ampere hour (Ah) in 1 to 30 cycles to 0.6 ampere hour in 230 to 260 cycles with the increase in the number of cycles. As shown in FIG. 9C, the record of the depth of discharge (DoD) of the aforementioned cycles has a trend that the depth of discharge stably remains around 100% with the increase in the number of cycles.

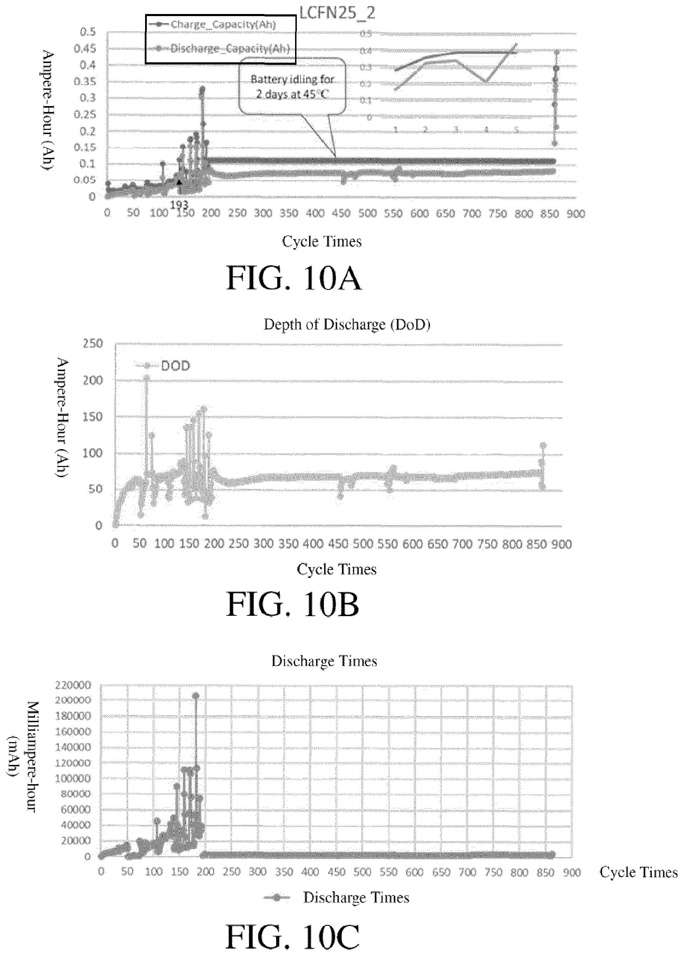

Experimental example 2. The lead-carbon battery LCFN25_2 of the embodiment 5 was subjected to a rapid charge/ discharge and battery life test. As shown in FIG. 10A to FIG. 10C, a total of 850 cycles were performed. As shown in below Table 3 which illustrates the conditions of the cyclic charge/ discharge test in the experimental example 2, there are two stages of charging and discharging with different voltages and currents respectively.

As shown in FIG. 10A to FIG. 10C, after 193 cycles of charging and discharging at different voltages, a total of 656 cycles of charging and discharging at constant currents was done. The results have stable level in terms of Columbic efficiency and discharge depth. Accordingly, it can withstand cyclic charging and discharging under changing voltage conditions, also can maintain stable coulomb efficiency and discharge depth in subsequent charging and discharging.

**Table 3**

| | charging | | | discharging | | Number of cycling |
|---|---|---|---|---|---|---|
| | Voltage (V) | Current (A) | Time | Current (A) | Cut-off voltage (V) | |
| Stage 1 | 2.8 | - | 30 seconds | 0.005 | 0.5 | 1 to 193 |
| | 2.4 | - | 2 hours | | | |
| Stage 2 | - | 0.15 | 1 hours | 0.1 | 1.5 | 194 to 850 |

The method provided by the invention is environmentally friendly. It does not require further heat treatment after compression, and the temperature can be optionally set from room temperature to 270°C during the compression for forming the lead-carbon electrode. In addition, no pressurized working environment is required, and then energy is saved and safety of operator is ensured. Also, pre-treatment of lead or carbon materials can be simplified or even omitted, and then contamination caused by organic solvents is reduced. Moreover, the lead material and the carbon material are combined by only using compression, which is more advantageous than using penetration, coating or others to combine the lead material with the carbon material. Further, the invention can optionally heat the compressing unit and/or the lead material to enhance the combining effect between the lead material and the carbon material. The lead-carbon electrode provided by the present invention can be used as a super capacitor, which can be adapted to fast charging and discharging conditions from 1 to 5 C. Also, it can withstand multiple cycles of charging and discharging under the charging and discharging conditions of voltage changes. In addition, it has stable Columbic efficiency and discharging depth in the subsequent charging and discharging at constant current, and has strong battery resistance and long life expectancy.

While the invention has been described in connection with what is considered the most practical and preferred embodiments, it is understood that this invention is not limited to the disclosed embodiments but is intended to cover various arrangements included within the spirit and scope of the broadest interpretation so as to encompass all such modifications and equivalent arrangements.

## Claims

1. A method for lead carbon compression moulding, comprising:
a first stacking step (S1): placing a first carbon material (13) between a first lead material (11) and a second lead material (12) so as to form a first lead-carbon sandwich (100), wherein the first carbon material (13) is a carbon fiber fabric which is made of materials selected from the group consisting of activated carbon, bamboo carbon, charcoal or any combination thereof; and
a first compressing step (S2): compressing the first lead-carbon sandwich (100) between a first compressing unit (31) and a second compressing unit (32) such that the first lead material (11) and the second lead material (12) are combined with the first carbon material (13) so as to form a first lead-carbon electrode (1);
wherein, before the compressing step (S2), the method further comprises heating the first compressing unit (31) and the second compressing unit (32) to a first temperature between 60 to 170°C,
wherein the first lead-carbon sandwich has a first thickness d1 and the first lead-carbon electrode has a second thickness d2, and the ratio of d1 to d2 is less than 10:1.

2. The method for lead carbon compression moulding according to claim 1, further comprising the following:
the first compressing unit (31) and the second compressing unit (32) forms a working distance (w) therebetween, wherein the ratio of the first thickness d1 to the working distance (w) is between 1:1 to 35:1.

3. The method for lead carbon compression moulding according to claim 1, further comprising at least one of the following:
a first heating step (H1) which heats the first lead material (11), the second lead material (12) and the first carbon material (13) to the first temperature before the first stacking step (H1), wherein the first temperature between 60°C to 170°C; and
the first compressing unit (31) is a first roller (R1) and the second compressing unit (32) is a second roller (R2), wherein the first roller (R1) and the second roller (R2) roll relative to each other along their respective axes at a rolling rate so as to compress the first thickness d1 into the second thickness d2, wherein the ratio of d1 to d2 is between 3:1 to 6.5:1.

4. The method for lead carbon compression moulding according to claim 1, which further comprises a second stacking step (S3) and a second compressing step (S4), wherein the second stacking step (S3) places a second carbon material (14) between the first lead-carbon sandwich (100) and a third lead material (15) so as to form a second lead-carbon sandwich (101), wherein the second compressing step (S4) compresses the second lead-carbon sandwich (101) between the first compressing unit (31) and the second compressing unit (32) such that the third lead material (15), the second carbon material (14) and the first lead-carbon sandwich (100) are combined with so as to form a second lead-carbon electrode (2), wherein the second lead-carbon sandwich (101) has a third thickness d3 and the second lead-carbon electrode (2) has a fourth thickness d4, and wherein the ratio of d3 to d4 is less than 10:1.

5. The method for lead carbon compression moulding according to claim 1, wherein one surface of the first lead material (11) is in contact with the first carbon material (13) to form a first joint surface (131) and another surface is a first compressed surface (111) directly contacted with the first compressing unit (31), wherein one surface of the second lead material (12) is in contact with the first carbon material (13) opposite to the first lead material (11) to form a second joint surface (132) and another surface is a second compressed surface (121) directly contacted with the second compressing unit (32), and wherein the distance between the first compressed surface (111) of the first lead-carbon sandwich (100) and the second compressed surface (121) is the first thickness d1 and the distance between the first compressed surface (111) of the first lead-carbon electrode (1) and the second compressed surface (121) is the second thickness d2.

6. The method for lead carbon compression moulding according to claim 5, further comprising at least one of the following:
the first compressing unit and the second compressing unit forms a working distance therebetween, wherein the ratio of the first thickness d1 to the working distance (w) is between 1:1 to 35:1.

7. The method for lead carbon compression moulding according to claim 5, further comprising at least one of the following:
a first heating step (H1) which heats the first lead material (11), the second lead material (12) and the first carbon material (13) to a the first temperature before the first stacking step (S1), wherein the first temperature is between 60°C to 170°C; and
the first compressing unit is a first roller and the second compressing unit is a second roller, wherein the first roller and the second roller roll relative to each other along their respective axes at a rolling rate so as to compress the first thickness d1 into the second thickness d2, wherein the ratio of d1 to d2 is between 3:1 to 6.5:1.

8. The method for lead carbon compression moulding according to claim 5, which further comprises a second stacking step (S3) and a second compressing step (S4), wherein the second stacking step (S3) places a second carbon material (14) between the first lead-carbon sandwich (100) and a third lead material (15) so as to form a second lead-carbon sandwich (101), wherein the second compressing step (S4) compresses the second lead-carbon sandwich (101) between the first compressing unit (31) and the second compressing unit (32) such that the third lead material (15), the second carbon material (14) and the first lead-carbon sandwich (100) are combined with so as to form a second lead-carbon electrode (2), wherein the second lead-carbon sandwich (101) has a third thickness d3 and the second lead-carbon electrode (2) has a fourth thickness d4, and wherein the ratio of d3 to d4 is less than 10:1.

9. The method for lead carbon compression moulding according to claim 5, wherein the lead to carbon ratio of the first joint surface (131) is between 1:0.01 to 1:1, and wherein the lead to carbon ratio of the second joint surface (132) is between 1:0.01 to 1:1.

10. A lead-carbon electrode set (C), which comprises at least a lead-carbon electrode made by the method as claimed in any one of claims 1 to 9.

11. A lead-carbon battery (Ba), which comprises an electrolyte (E), and anode sheet set (Ac) and a cathode sheet set (Cc), wherein the anode sheet set (Ac) is immersed in the electrolyte (E), electrically connected to an anode, and comprises the lead-carbon electrode set (C) as claimed in claim 10, wherein the cathode sheet set (Cc) is immersed in the electrolyte (E), electrically connected to a cathode (Ca), and comprises the lead-carbon electrode set (C) as claimed in clam claim 10.

## Patentansprüche

1. - Verfahren zum Blei-Kohlenstoff-Verdichtungsformen, umfassend:
einen ersten Stapelschritt (S1): Platzieren eines ersten Kohlenstoffmaterials (13) zwischen einem ersten Bleimaterial (11) und einem zweiten Bleimaterial (12), um ein erstes Blei-Kohlenstoff-Sandwich (100) zu bilden, wobei das erste Kohlenstoffmaterial (13) ein Kohlenstofffasergewebe ist, das aus Materialien gefertigt ist, die ausgewählt sind aus der Gruppe, bestehend aus Aktivkohle, Bambuskohle, Holzkohle oder einer beliebigen Kombination davon; und
einen ersten Verdichtungsschritt (S2): Verdichten des ersten Blei-Kohlenstoff-Sandwichs (100) zwischen einer ersten Verdichtungseinheit (31) und einer zweiten Verdichtungseinheit (32), sodass das erste Bleimaterial (11) und das zweite Bleimaterial (12) mit dem ersten Kohlenstoffmaterial (13) kombiniert werden, um eine erste Blei-Kohlenstoff-Elektrode (1) zu bilden;
wobei das Verfahren vor dem Verdichtungsschritt (S2) ferner ein Erhitzen der ersten Verdichtungseinheit (31) und der zweiten Verdichtungseinheit (32) auf eine erste Temperatur zwischen 60 bis 170 °C umfasst,
wobei das erste Blei-Kohlenstoff-Sandwich eine erste Stärke d1 und die erste Blei-Kohlenstoff-Elektrode eine zweite Stärke d2 aufweist, und das Verhältnis von d1 zu d2 kleiner ist als 10:1.

2. - Verfahren zum Blei-Kohlenstoff-Verdichtungsformen nach Anspruch 1, das ferner Folgendes umfasst:
die erste Verdichtungseinheit (31) und die zweite Verdichtungseinheit (32) bilden einen Arbeitsabstand (w) dazwischen, wobei das Verhältnis der ersten Stärke d1 zu dem Arbeitsabstand (w) zwischen 1:1 bis 35:1 ist.

3. - Verfahren zum Blei-Kohlenstoff-Verdichtungsformen nach Anspruch 1, ferner umfassend mindestens eines der Folgenden:
einen ersten Erhitzungsschritt (H1), der das erste Bleimaterial (11), das zweite Bleimaterial (12) und das erste Kohlenstoffmaterial (13) vor dem ersten Stapelschritt (H1) auf die erste Temperatur erhitzt, wobei die erste Temperatur zwischen 60 °C bis 170 °C ist; und
die erste Verdichtungseinheit (31) ist eine erste Walze (R1) und die zweite Verdichtungseinheit (32) ist eine zweite Walze (R2), wobei die erste Walze (R1) und die zweite Walze (R2) in Bezug aufeinander entlang ihrer jeweiligen Achsen mit einer Walzgeschwindigkeit rollen, um die erste Stärke d1 auf die zweite Stärke d2 zu verdichten, wobei das Verhältnis von d1 zu d2 zwischen 3:1 bis 6,5:1 ist.

4. - Verfahren zum Blei-Kohlenstoff-Verdichtungsformen nach Anspruch 1, das ferner einen zweiten Stapelschritt (S3) und einen zweiten Verdichtungsschritt (S4) umfasst, wobei der zweite Stapelschritt (S3) ein zweites Kohlenstoffmaterial (14) zwischen dem ersten Blei-Kohlenstoff-Sandwich (100) und einem dritten Bleimaterial (15) platziert, um ein zweites Blei-Kohlenstoff-Sandwich (101) zu bilden, wobei der zweite Verdichtungsschritt (S4) das zweite Blei-Kohlenstoff-Sandwich (101) zwischen der ersten Verdichtungseinheit (31) und der zweiten Verdichtungseinheit (32) komprimiert, sodass das dritte Bleimaterial (15), das zweite Kohlenstoffmaterial (14) und das erste Blei-Kohlenstoff-Sandwich (100) miteinander verbunden werden, um eine zweite Blei-Kohlenstoff-Elektrode (2) zu bilden, wobei das zweite Blei-Kohlenstoff-Sandwich (101) eine dritte Stärke d3 und die zweite Blei-Kohlenstoff-Elektrode (2) eine vierte Stärke d4 aufweist, und wobei das Verhältnis von d3 zu d4 kleiner ist als 10:1.

5. - Verfahren zum Blei-Kohlenstoff-Verdichtungsformen nach Anspruch 1, wobei eine Oberfläche des ersten Bleimaterials (11) mit dem ersten Kohlenstoffmaterial (13) in Kontakt ist, um eine erste Verbindungsfläche (131) zu bilden, und eine andere Oberfläche eine erste komprimierte Fläche (111) ist, die direkt mit der ersten Verdichtungseinheit (31) in Kontakt ist, wobei eine Oberfläche des zweiten Bleimaterials (12) mit dem ersten Kohlenstoffmaterial (13) gegenüber dem ersten Bleimaterial (11) in Kontakt ist, um eine zweite Verbindungsfläche (132) zu bilden, und eine andere Oberfläche eine zweite komprimierte Fläche (121) ist, die direkt mit der zweiten Verdichtungseinheit (32) in Kontakt ist, und wobei der Abstand zwischen der ersten komprimierten Fläche (111) des ersten Blei-Kohlenstoff-Sandwichs (100) und der zweiten komprimierten Fläche (121) die erste Stärke d1 ist und der Abstand zwischen der ersten komprimierten Fläche (111) der ersten Blei-Kohlenstoff-Elektrode (1) und der zweiten komprimierten Fläche (121) die zweite Stärke d2 ist.

6. - Verfahren zum Blei-Kohlenstoff-Verdichtungsformen nach Anspruch 5, ferner umfassend mindestens eines der Folgenden:
die erste Verdichtungseinheit und die zweite Verdichtungseinheit bilden einen Arbeitsabstand dazwischen, wobei das Verhältnis der ersten Stärke d1 zu dem Arbeitsabstand (w) zwischen 1:1 bis 35:1 ist.

7. - Verfahren zum Blei-Kohlenstoff-Verdichtungsformen nach Anspruch 5, ferner umfassend mindestens eines der Folgenden:
einen ersten Erhitzungsschritt (H1), der das erste Bleimaterial (11), das zweite Bleimaterial (12) und das erste Kohlenstoffmaterial (13) vor dem ersten Stapelschritt (S1) auf die erste Temperatur erhitzt, wobei die erste Temperatur zwischen 60 °C bis 170 °C ist; und
die erste Verdichtungseinheit ist eine erste Walze und die zweite Verdichtungseinheit ist eine zweite Walze, wobei die erste Walze und die zweite Walze in Bezug aufeinander entlang ihrer jeweiligen Achsen mit einer Walzgeschwindigkeit rollen, um die erste Stärke d1 auf die zweite Stärke d2 zu verdichten, wobei das Verhältnis von d1 zu d2 zwischen 3:1 bis 6,5:1 ist.

8. - Verfahren zum Blei-Kohlenstoff-Verdichtungsformen nach Anspruch 5, das ferner einen zweiten Stapelschritt (S3) und einen zweiten Verdichtungsschritt (S4) umfasst, wobei der zweite Stapelschritt (S3) ein zweites Kohlenstoffmaterial (14) zwischen dem ersten Blei-Kohlenstoff-Sandwich (100) und einem dritten Bleimaterial (15) platziert, um ein zweites Blei-Kohlenstoff-Sandwich (101) zu bilden, wobei der zweite Verdichtungsschritt (S4) das zweite Blei-Kohlenstoff-Sandwich (101) zwischen der ersten Verdichtungseinheit (31) und der zweiten Verdichtungseinheit (32) komprimiert, sodass das dritte Bleimaterial (15), das zweite Kohlenstoffmaterial (14) und das erste Blei-Kohlenstoff-Sandwich (100) miteinander kombiniert werden, um eine zweite Blei-Kohlenstoff-Elektrode (2) zu bilden, wobei das zweite Blei-Kohlenstoff-Sandwich (101) eine dritte Stärke d3 aufweist und die zweite Blei-Kohlenstoff-Elektrode (2) eine vierte Stärke d4 aufweist, und wobei das Verhältnis von d3 zu d4 kleiner ist als 10:1.

9. - Verfahren zum Blei-Kohlenstoff-Verdichtungsformen nach Anspruch 5, wobei das Verhältnis Blei-Kohlenstoff der ersten Verbindungsfläche (131) zwischen 1:0,01 und 1:1 ist, und wobei das Verhältnis Blei-Kohlenstoff der zweiten Verbindungsfläche (132) zwischen 1:0,01 und 1:1 ist.

10. - Blei-Kohlenstoff-Elektrodensatz (C), der mindestens eine Blei-Kohlenstoff-Elektrode umfasst, die durch das Verfahren nach einem der Ansprüche 1 bis 9 gefertigt wird.

11. - Blei-Kohlenstoff-Batterie (Ba), die einen Elektrolyten (E), einen Anodenplattensatz (Ac) und einen Kathodenplattensatz (Cc) umfasst, wobei der Anodenplattensatz (Ac) in den Elektrolyten (E) eingetaucht, elektrisch mit einer Anode verbunden ist und den Blei-Kohlenstoff-Elektrodensatz (C) nach Anspruch 10 umfasst, wobei der Kathodenplattensatz (Cc) in den Elektrolyten (E) eingetaucht, elektrisch mit einer Kathode (Ca) verbunden ist und den Blei-Kohlenstoff-Elektrodensatz (C) nach Anspruch 10 umfasst.

## Revendications

1. - Procédé de moulage par compression de plomb-carbone, comprenant :
une première étape d'empilement (S1) : placer un premier matériau de carbone (13) entre un premier matériau de plomb (11) et un deuxième matériau de plomb (12) de manière à former un premier sandwich plomb-carbone (100), le premier matériau de carbone (13) étant un tissu en fibres de carbone qui est fait de matériaux choisis dans le groupe consistant en charbon actif, carbone de bambou, charbon de bois ou toute combinaison de ceux-ci ; et
une première étape de compression (S2) : compresser le premier sandwich plomb-carbone (100) entre une première unité de compression (31) et une seconde unité de compression (32) de telle sorte que le premier matériau de plomb (11) et le deuxième matériau de plomb (12) soient combinés avec le premier matériau de carbone (13) afin de former une première électrode plomb-carbone (1) ;
dans lequel, avant l'étape de compression (S2), le procédé comprend en outre le chauffage de la première unité de compression (31) et de la seconde unité de compression (32) à une première température dans la plage de 60 à 170°C,
dans lequel le premier sandwich plomb-carbone présente une première épaisseur d1 et la première électrode plomb-carbone présente une deuxième épaisseur d2, et le rapport de d1 à d2 est inférieur à 10:1.

2. - Procédé de moulage par compression de plomb-carbone selon la revendication 1, comprenant en outre ce qui suit :
la première unité de compression (31) et la seconde unité de compression (32) forment une distance de travail (w) entre elles, le rapport de la première épaisseur d1 à la distance de travail (w) étant dans la plage de 1:1 à 35:1.

3. - Procédé de moulage par compression de plomb-carbone selon la revendication 1, comprenant en outre au moins l'un de ce qui suit :
une première étape de chauffage (H1) qui chauffe le premier matériau de plomb (11), le deuxième matériau de plomb (12) et le premier matériau de carbone (13) à la première température avant la première étape d'empilement (H1), la première température étant dans la plage de 60°C et 170°C ; et
la première unité de compression (31) est un premier rouleau (R1) et la seconde unité de compression (32) est un second rouleau (R2), le premier rouleau (R1) et le second rouleau (R2) roulant l'un par rapport à l'autre le long de leurs axes respectifs à une vitesse de roulement afin de compresser la première épaisseur d1 pour obtenir la deuxième épaisseur d2, le rapport de d1 à d2 étant dans la plage de 3:1 à 6,5:1.

4. - Procédé de moulage par compression de plomb-carbone selon la revendication 1, qui comprend en outre une seconde étape d'empilement (S3) et une seconde étape de compression (S4), la seconde étape d'empilement (S3) plaçant un second matériau de carbone (14) entre le premier sandwich plomb-carbone (100) et un troisième matériau de plomb (15) de manière à former un second sandwich plomb-carbone (101), la seconde étape de compression (S4) compressant le second sandwich plomb-carbone (101) entre la première unité de compression (31) et la seconde unité de compression (32) de telle sorte que le troisième matériau de plomb (15), le second matériau de carbone (14) et le premier sandwich plomb-carbone (100) soient combinés de manière à former une seconde électrode plomb-carbone (2), le second sandwich plomb-carbone (101) ayant une troisième épaisseur d3 et la seconde électrode plomb-carbone (2) ayant une quatrième épaisseur d4, et le rapport de d3 à d4 étant inférieur à 10:1.

5. - Procédé de moulage par compression de plomb-carbone selon la revendication 1, dans lequel une surface du premier matériau de plomb (11) est en contact avec le premier matériau de carbone (13) pour former une première surface de jonction (131) et une autre surface est une première surface compressée (111) en contact direct avec la première unité de compression (31), une surface du deuxième matériau de plomb (12) étant en contact avec le premier matériau de carbone (13) à l'opposé du premier matériau de plomb (11) pour former une seconde surface de jonction (132) et une autre surface est une seconde surface compressée (121) étant en contact direct avec la seconde unité de compression (32), et la distance entre la première surface compressée (111) du premier sandwich plomb-carbone (100) et la seconde surface compressée (121) correspondant à la première épaisseur d1 et la distance entre la première surface compressée (111) de la première électrode plomb-carbone (1) et la seconde surface compressée (121) correspondant à la deuxième épaisseur d2.

6. - Procédé de moulage par compression de plomb-carbone selon la revendication 5, comprenant en outre au moins l'un de ce qui suit :
la première unité de compression et la seconde unité de compression forment une distance de travail entre elles, le rapport dela première épaisseur d1 à la distance de travail (w) étant dans la plage de 1:1 à 35:1.

7. - Procédé de moulage par compression de plomb-carbone selon la revendication 5, comprenant en outre au moins l'une des étapes suivantes :
une première étape de chauffage (H1) qui chauffe le premier matériau de plomb (11), le deuxième matériau de plomb (12) et le premier matériau de carbone (13) à une première température avant la première étape d'empilement (S1), la première température étant dans la plage de 60°C et 170°C ; et
la première unité de compression est un premier rouleau et la seconde unité de compression est un second rouleau, le premier rouleau et le second rouleau roulant l'un par rapport à l'autre le long de leurs axes respectifs à une vitesse de roulement afin de compresser la première épaisseur d1 pour obtenir la deuxième épaisseur d2, le rapport de d1 à d2 étant dans la plage de 3:1 à 6,5:1.

8. - Procédé de moulage par compression de plomb-carbone selon la revendication 5, qui comprend en outre une seconde étape d'empilement (S3) et une seconde étape de compression (S4), la seconde étape d'empilement (S3) consistant à placer un second matériau de carbone (14) entre le premier sandwich plomb-carbone (100) et un troisième matériau de plomb (15) de manière à former un second sandwich plomb-carbone (101), la seconde étape de compression (S4) compressant le second sandwich plomb-carbone (101) entre la première unité de compression (31) et la seconde unité de compression (32) de telle sorte que le troisième matériau de plomb (15), le second matériau de carbone (14) et le premier sandwich plomb-carbone (100) soient combinés de manière à former une seconde électrode plomb-carbone (2), le second sandwich plomb-carbone (101) présentant une troisième épaisseur d3 et la seconde électrode plomb-carbone (2) ayant une quatrième épaisseur d4, et le rapport de d3 à d4 étant inférieur à 10:1.

9. - Procédé de moulage par compression de plomb-carbone selon la revendication 5, dans lequel le rapport plomb à carbone de la première surface de jonction (131) est dans la plage de 1:0,01 à 1:1, et le rapport plomb à carbone de la seconde surface de jonction (132) est dans la plage de 1:0,01 à 1:1.

10. - Ensemble électrode plomb-carbone (C), qui comprend au moins une électrode plomb-carbone obtenue par le procédé selon l'une quelconque des revendications 1 à 9.

11. - Batterie plomb-carbone (Ba), qui comprend un électrolyte (E), un ensemble feuille d'anode (Ac) et un ensemble feuille de cathode (Cc), l'ensemble feuille d'anode (Ac) étant immergé dans l'électrolyte (E), relié électriquement à une anode et comprenant l'ensemble électrode plomb-carbone (C) selon la revendication 10, l'ensemble feuille de cathode (Cc) étant immergé dans l'électrolyte (E), relié électriquement à une cathode (Ca) et comprenant l'ensemble électrode plomb-carbone (C) selon la revendication 10.
